# EUROPEAN PATENT APPLICATION

(11) **EP 4 271 113 A1**
(43) Date of publication of application: **01.11.2023**
(21) Application number: 21922451.6
(22) Date of filing: 11.11.2021
(51) Int. Cl.: H04W 76/15, H04W 76/18

(54) **COMMUNICATION METHOD AND APPARATUS**

(30) Priority: 26.01.2021 CN 202110104966
(71) Applicant: Huawei Technologies Co., Ltd., Shenzhen, Guangdong 518129 (CN)
(72) Inventor: LI, Yongcui, Shenzhen, Guangdong 518129 (CN); NI, Hui, Shenzhen, Guangdong 518129 (CN)
(74) Representative: Gill Jennings & Every LLP
(86) International application number: PCT/CN2021/130087
(87) International publication number: WO 2022/160861

(57) **Abstract**

This application discloses a communication method, and a corresponding apparatus and system. The method includes: A terminal device obtains association information between first traffic description information and second traffic description information; determines the first traffic description information and the second traffic description information for an initiated application; and sends a first request message and a second request message. The first request message is used to request to establish a first session corresponding to the first traffic description information, and includes first association information indicating that the first session is associated with a second session, and the second request message is used to request to establish the second session corresponding to the second traffic description information, and includes second association information indicating that the second session is associated with the first session.

## Description

This application claims priority to Chinese Patent Application No. 202110104966.X, filed with the China National Intellectual Property Administration on January 26, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

As communication technologies develop, a higher requirement is imposed on reliability between a terminal and another device (for example, a terminal or a network device). For example, reliability requirements of many industrial applications are above 99.9999%, and these applications with high reliability requirements also have high requirements on a latency. However, a current communication architecture usually cannot meet reliability requirements in some communication scenarios. For example, in a communication scenario of to business (to business, to B) services, a reliability requirement of a motion control (motion control, MC) service for a terminal to another device is 999.999%. For example, total allowable failure duration of a communication service terminal within one year is no more than 30 seconds. However, when the MC service is performed based on the current communication architecture, reliability of a network device (for example, an access network device) is only 99.9% to 99.99%. Therefore, reliability of an entire communication link cannot meet a reliability requirement of to-B services such as the MC service.

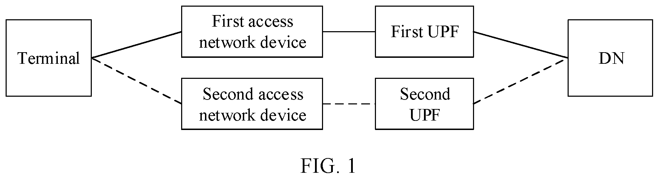

To resolve the problem that reliability of a communication link corresponding to a service cannot meet a reliability requirement of the service, two communication links may be configured to provide a communication service for a single service, to improve overall reliability. In this case, refer to FIG. 1. A communication architecture in FIG. 1 may include a terminal, a first access network device, a second access network device, a first user plane function (user plane function, UPF), and a second UPF. These two communication links are referred to as communication links mutually redundant. To ensure reliability, independence between the two communication links needs to be ensured. For example, one of the communication links includes the terminal, the first access network device, and the first UPF. The other communication link includes the terminal, the second access network device, and the second UPF. The terminal establishes a communication connection to a core network via the first access network device. For example, the terminal may perform signaling interaction with the core network via the first access network device, to establish a communication connection between the first access network device and the first UPF. In this way, service communication between the terminal and a data network (data network, DN) at a back end of the first UPF is implemented. For another example, the terminal may perform signaling interaction with the core network via the second access network device, to establish a communication connection between the second access network device and the second UPF.

To use the foregoing architecture, a primary access network device (for example, the first access network device) needs to select a secondary access network device (for example, the second access network device). In the conventional technology, the primary access network device selects the secondary access network device based on a redundancy sequence number (redundancy sequence number, RSN) value provided by a session management function (session management function, SMF). A same access network device may be selected for two mutually redundant communication links. As a result, independence between the two communication links cannot be ensured, and communication quality is reduced.

### SUMMARY

This application provides a communication method, apparatus, and system, to ensure independence between two communication links, so as to improve communication quality.

According to a first aspect, an embodiment of this application provides a communication method. The method includes: A terminal device obtains association information between first traffic description information and second traffic description information; the terminal device determines the first traffic description information and the second traffic description information for an initiated application; and the terminal device sends a first request message and a second request message. The first request message is used to request to establish a first session corresponding to the first traffic description information, and the second request message is used to request to establish a second session corresponding to the second traffic description information. The first request message includes first association information, and the second request message includes second association information. The first association information indicates that the first session is associated with the second session, and the second association information indicates that the second session is associated with the first session.

According to the communication method provided in embodiments of this application, a network side may determine, from the received first request message and the received second request message, that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain dual connectivity (dual connectivity, DC) (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

It should be noted that the description that the first traffic description information is associated with the second traffic description information may also be understood as that a first rule of the first traffic description information is associated with a second rule of the second traffic description information, or may be understood as that first route selection description information in the first rule is associated with second route selection description information in the second rule. This is not limited in this application.

For example, the terminal device obtains the association information between the first traffic description information and the second traffic description information from a route selection policy.

For example, the route selection policy includes the first rule corresponding to the first traffic description information and the second rule corresponding to the second traffic description information. The first rule includes first information indicating that the first traffic description information is associated with the second traffic description information. The second rule includes second information indicating that the second traffic description information is associated with the first traffic description information. In a possible implementation, the first information and the second information correspond to same first indication information, and the first indication information indicates that the first traffic description information is associated with the second traffic description information. In another possible implementation, the first information includes information about the second rule, and the second information includes information about the first rule. For example, the information about the first rule is an identifier of the first rule, or traffic description information or route selection description information included in the first rule. The information about the second rule is an identifier of the second rule, or traffic description information or route selection description information included in the second rule.

For example, the terminal device obtains a locally configured route selection policy. Alternatively, the terminal device receives a route selection policy from a policy control function device.

In addition, the method may further include: The terminal device may further determine, based on the association information, that the first traffic description information is associated with the second traffic description information.

In a possible implementation, the first association information includes identification information of the second session, and the second association information includes identification information of the first session. In another possible implementation, the first association information and the second association information correspond to same second indication information, and the second indication information indicates that the first session is associated with the second session.

According to a second aspect, an embodiment of this application further provides a flowchart of a communication method. The method includes: A policy control function device learns association information between first traffic description information and second traffic description information from an application function device; the policy control function device generates a route selection policy based on the association information; and the policy control function device sends the route selection policy to a terminal device. The route selection policy is used to determine an association between a first session corresponding to the first traffic description information and a second session corresponding to the second traffic description information.

According to the communication method provided in embodiments of this application, after receiving the route selection policy, the terminal device sends a first request message and a second request message to a network side. The network side may determine, from the received first request message and the received second request message, that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

For example, the route selection policy includes a first rule corresponding to the first traffic description information and a second rule corresponding to the second traffic description information. The first rule includes first information indicating that the first traffic description information is associated with the second traffic description information. The second rule includes second information indicating that the second traffic description information is associated with the first traffic description information. In a possible implementation, the first information and the second information correspond to same first indication information, and the first indication information indicates that the first traffic description information is associated with the second traffic description information. In another possible implementation, the first information includes information about the second rule, and the second information includes information about the first rule.

According to a third aspect, an embodiment of this application further provides a flowchart of a communication method. The method includes: A terminal device receives first association information from a session management function device in a procedure of establishing a first session, where the first association information indicates that the first session is associated with a second session; the terminal device initiates a procedure of modifying the second session; and the terminal device sends second association information to the session management function device in the procedure of modifying the second session, where the second association information indicates that the first session is associated with the second session. For example, the second association information includes an identifier of the first session.

According to the foregoing method, a network side may determine that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

According to a fourth aspect, an embodiment of this application further provides a flowchart of a communication method. The method includes: A data management function device configures association information between first route description information and second route description information; the data management function device receives the first route description information corresponding to a first session from a session management function device, where the data management function device stores a second session and the second route description information corresponding to the second session; and the data management function device sends an identifier of the second session to the session management function device based on the configured association information and the first route description information.

According to the foregoing method, a network side may determine that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

For example, the data management function device determines an association between the first route description information and the second route description information based on the configured association information and the first route description information. The data management function device determines the identifier of the second session corresponding to the second route description information. The data management function device sends the identifier of the second session to the session management function device.

For example, that the data management function device sends the identifier of the second session to the session management function device includes: The data management function device sends association information to the session management function device. The association information includes an identifier of the first session and the identifier of the second session.

According to a fifth aspect, an embodiment of this application further provides a flowchart of a communication method. The method includes: A session management function device sends first route description information corresponding to a first session to a data management function device; the session management function device receives an identifier of a second session from the data management function device; and the session management function device sends association information to an access network device or a terminal device, where the association information indicates that the first session is associated with the second session.

For example, the session management function device receives association information from the data management function device, where the association information includes an identifier of the first session and the identifier of the second session.

According to the foregoing method, a network side may determine that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

According to a sixth aspect, a communication apparatus is provided, including a processing unit and a communication unit. The processing unit is configured to: obtain association information between first traffic description information and second traffic description information, and determine the first traffic description information and the second traffic description information for an initiated application. The communication unit is configured to send a first request message and a second request message, where the first request message is used to request to establish a first session corresponding to the first traffic description information, and the second request message is used to request to establish a second session corresponding to the second traffic description information. The first request message includes first association information, and the second request message includes second association information. The first association information indicates that the first session is associated with the second session, and the second association information indicates that the second session is associated with the first session. The communication apparatus may be a terminal device, or a chip configured to implement a function of the terminal device.

By using the foregoing communication apparatus, a network side may determine, from the received first request message and the received second request message, that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

For example, the processing unit is configured to obtain the association information between the first traffic description information and the second traffic description information from a route selection policy.

For example, the route selection policy includes a first rule corresponding to the first traffic description information and a second rule corresponding to the second traffic description information. The first rule includes first information indicating that the first traffic description information is associated with the second traffic description information. The second rule includes second information indicating that the second traffic description information is associated with the first traffic description information. In a possible implementation, the first information and the second information correspond to same first indication information, and the first indication information indicates that the first traffic description information is associated with the second traffic description information. In another possible implementation, the first information includes information about the second rule, and the second information includes information about the first rule.

For example, the processing unit is configured to obtain a locally configured route selection policy. Alternatively, the processing unit is configured to control a communication unit to receive a route selection policy from a policy control function device.

In addition, the processing unit may be further configured to determine, based on the association information, that the first traffic description information is associated with the second traffic description information.

In a possible implementation, the first association information includes identification information of the second session, and the second association information includes identification information of the first session. In another possible implementation, the first association information and the second association information correspond to same second indication information, and the second indication information indicates that the first session is associated with the second session.

According to a seventh aspect, an embodiment of this application further provides a communication apparatus, including a processing unit and a communication unit. The communication unit is configured to learn association information between first traffic description information and second traffic description information from an application function device. The processing unit is configured to generate a route selection policy based on the association information. The communication unit is further configured to send the route selection policy to a terminal device. The route selection policy is used to determine an association between a first session corresponding to the first traffic description information and a second session corresponding to the second traffic description information.

The communication apparatus may be a policy control function device, or a chip configured to implement a function of the policy control function device.

By using the foregoing communication apparatus, after receiving the route selection policy, the terminal device sends a first request message and a second request message to a network side. The network side may determine, from the received first request message and the received second request message, that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

For example, the route selection policy includes a first rule corresponding to the first traffic description information and a second rule corresponding to the second traffic description information. The first rule includes first information indicating that the first traffic description information is associated with the second traffic description information. The second rule includes second information indicating that the second traffic description information is associated with the first traffic description information. In a possible implementation, the first information and the second information correspond to same first indication information, and the first indication information indicates that the first traffic description information is associated with the second traffic description information. In another possible implementation, the first information includes information about the second rule, and the second information includes information about the first rule.

According to an eighth aspect, an embodiment of this application further provides a communication apparatus, including a processing unit and a communication unit. The communication unit is configured to receive first association information from a session management function device in a procedure of establishing a first session. The first association information indicates that the first session is associated with a second session. The processing unit is configured to: initiate a procedure of modifying the second session, and control the communication unit to send second association information to the session management function device in the procedure of modifying the second session. The second association information indicates that the first session is associated with the second session. For example, the second association information includes an identifier of the first session.

The communication apparatus may be a terminal device, or a chip configured to implement a function of the terminal device.

By using the foregoing communication apparatus, a network side may determine that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

According to a ninth aspect, an embodiment of this application further provides a communication apparatus, including a processing unit and a communication unit. The processing unit is configured to configure association information between first route description information and second route description information. The communication unit is configured to receive the first route description information corresponding to a first session from a session management function device. The data management function device stores a second session and the second route description information corresponding to the second session. The processing unit is configured to control, based on the configured association information and the first route description information, the communication unit to send an identifier of the second session to the session management function device.

The communication apparatus may be a data management function device, or a chip configured to implement a function of the data management function device.

By using the foregoing communication apparatus, a network side may determine that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

For example, the processing unit is configured to: determine an association between the first route description information and the second route description information based on the configured association information and the first route description information, determine the identifier of the second session corresponding to the second route description information, and control the communication unit to send the identifier of the second session to the session management function device.

For example, the processing unit controls the communication unit to send association information to the session management function device. The association information includes an identifier of the first session and the identifier of the second session.

According to a tenth aspect, an embodiment of this application further provides a communication apparatus, including a processing unit and a communication unit. A communication unit is configured to: send first route description information corresponding to a first session to a data management function device; receive an identifier of a second session from the data management function device; and send association information to an access network device or a terminal device. The association information indicates that the first session is associated with the second session.

The communication apparatus may be a session management function device, or a chip configured to implement a function of the session management function device.

For example, the communication unit is configured to receive association information from the data management function device. The association information includes an identifier of the first session and the identifier of the second session.

By using the foregoing communication apparatus, a network side may determine that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

According to an eleventh aspect, a communication apparatus is provided, including a processor. The processor is connected to a memory. The memory is configured to store computer-executable instructions, and the processor executes the computer-executable instructions stored in the memory, to implement any method provided in any one of the first aspect to the fifth aspect. For example, the memory and the processor may be integrated, or may be independent components. If the memory and the processor are independent components, the memory may be located in the communication apparatus, or may be located outside the communication apparatus.

In a possible implementation, the processor includes a logic circuit, and further includes an input interface and/or an output interface. For example, the output interface is configured to perform a sending action in a corresponding method, and the input interface is configured to perform a receiving action in a corresponding method.

In a possible implementation, the communication apparatus further includes a communication interface and a communication bus. The processor, the memory, and the communication interface are connected through the communication bus. The communication interface is configured to perform a sending and receiving action in a corresponding method. The communication interface may also be referred to as a transceiver. Optionally, the communication interface includes at least one of a transmitter and a receiver. In this case, the transmitter is configured to perform a sending action in a corresponding method, and the receiver is configured to perform a receiving action in a corresponding method.

In a possible implementation, the communication apparatus exists in a product form of a chip.

According to a twelfth aspect, a communication apparatus is provided, including a processor and an interface. The processor is coupled to a memory through the interface. When the processor executes a computer program in the memory or computer-executable instructions, any method provided in any one of the first aspect to the fifth aspect is enabled to be performed.

According to a thirteenth aspect, a computer-readable storage medium is provided, including computer-executable instructions. When the computer-executable instructions run on a computer, the computer is enabled to perform any method provided in any one of the first aspect to the fifth aspect.

According to a fourteenth aspect, a computer program product is provided, including computer-executable instructions. When the computer-executable instructions run on a computer, the computer is enabled to perform any method provided in any one of the first aspect to the fifth aspect.

According to a fifteenth aspect, a communication system is provided, including the terminal device provided in the first aspect and the policy control function device provided in the second aspect.

According to a sixteenth aspect, a communication system is provided, including the data management function device provided in the fourth aspect and the session management function device provided in the fifth aspect. In a possible implementation, the communication system may further include the terminal device provided in the third aspect.

For technical effects brought by any implementation of the sixth aspect to the sixteenth aspect, refer to technical effects brought by corresponding implementations of the first aspect to the fifth aspect. Details are not described herein again.

It should be noted that, on the premise that solutions do not conflict, the solutions in the foregoing aspects all may be combined.

### BRIEF DESCRIPTION OF DRAWINGS

FIG. 1 is a schematic diagram of communication between a terminal and a DN;
FIG. 2 is a schematic composition diagram of a network architecture;
FIG. 3 is a schematic diagram of a PDU session;
FIG. 4 is a signaling interaction diagram of a communication method according to an embodiment of this application;
FIG. 5 is another signaling interaction diagram of a communication method according to an embodiment of this application;
FIG. 6 is a flowchart of a communication method according to an embodiment of this application;
FIG. 7 is another flowchart of a communication method according to an embodiment of this application;
FIG. 8 is another signaling interaction diagram of a communication method according to an embodiment of this application;
FIG. 9 is a flowchart of a communication method according to an embodiment of this application;
FIG. 10 is another flowchart of a communication method according to an embodiment of this application;
FIG. 11 is another flowchart of a communication method according to an embodiment of this application;
FIG. 12 is a schematic composition diagram of a communication apparatus according to an embodiment of this application;
FIG. 13 is a schematic diagram of a hardware structure of a communication apparatus according to an embodiment of this application; and
FIG. 14 is a schematic diagram of a hardware structure of another communication apparatus according to an embodiment of this application.

### DESCRIPTION OF EMBODIMENTS

In description of this application, unless otherwise specified, "/" means "or". For example, A/B may represent A or B. "And/or" in this specification is merely an association relationship for describing associated objects, and represents that three relationships may exist. For example, A and/or B may represent that only A exists, both A and B exist, and only B exists. In the description of this application, unless otherwise specified, "at least one" refers to one or more, and "a plurality of" refers to two or more.

In addition, to clearly describe technical solutions in embodiments of this application, terms such as "first" and "second" are used to distinguish same items or similar items that have basically same functions and effects. A person skilled in the art may understand that the terms "first" and "second" do not limit a quantity or an execution sequence, and the terms "first" and "second" do not necessarily limit a difference.

The technical solutions in embodiments of this application may be applied to a fourth generation (4th Generation, 4G) system, various systems evolved based on a 4G system, a fifth generation (fifth generation, 5G) system, and various systems evolved based on a 5G system. The 4G system may also be referred to as an evolved packet system (evolved packet system, EPS). A core network (core network, CN) of the 4G system may be referred to as an evolved packet core (evolved packet core, EPC) network, and an access network may be referred to as long term evolution (long term evolution, LTE). A core network of the 5G system may be referred to as a 5GC (5G core), and an access network may be referred to as new radio (new radio, NR). For ease of description, the following describes this application by using an example in which this application is applied to a 5G system. When this application is applied to a 4G system or another communication system, a network element involved in this application may be replaced with a network element that has a same or similar function in a corresponding communication system.

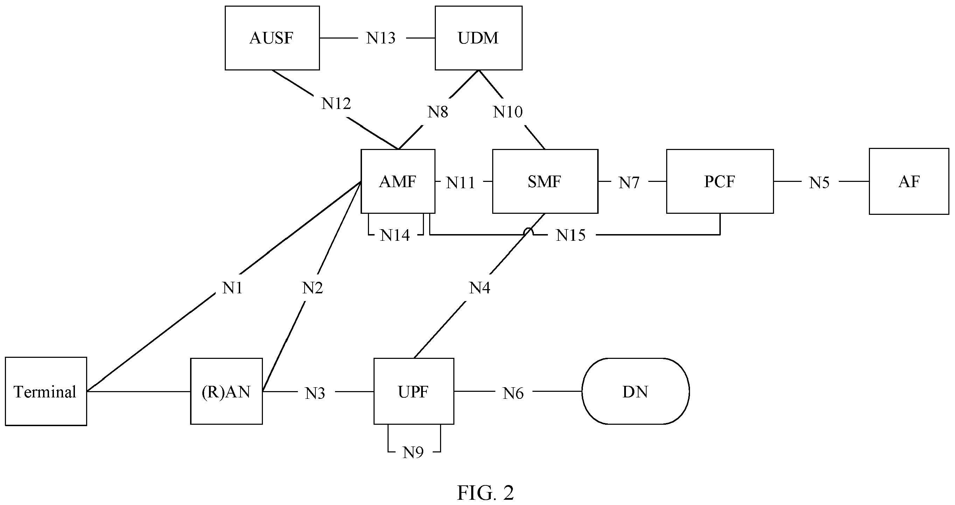

FIG. 2 is an example of a schematic diagram of a network architecture of a 5G system. In the schematic diagram, the 5G system may include an authentication server function (authentication server function, AUSF) network element, an access and mobility management function (access and mobility management function, AMF) network element, a DN, a unified data management (unified data management, UDM) network element, a policy control function (policy control function, PCF) network element, a (radio) access network ((radio) access network, (R) AN) network element, a UPF network element, a terminal (terminal), an application function (application function, AF) network element, and a session management function (session management function, SMF) network element.

For ease of description, in the following, the (R)AN network element, the AMF network element, the SMF network element, the UDM network element, the UPF network element, the PCF network element, and the like are respectively indicated by a RAN, an AMF, an SMF, a UDM, a UPF, a PCF, and the like.

The 5G system includes an access network and a core network. The access network is configured to implement functions related to radio access, and mainly includes the RAN. The core network is used for network service control, data transmission, and the like. The core network consists of a plurality of network elements, mainly including the AMF, SMF, UPF, PCF, UDM, and the like.

Functions of some network elements in FIG. 2 are as follows.

The PCF is responsible for providing policies, such as a quality of service (quality of service, QoS) policy and a slice selection policy, for the AMF and the SMF.

The UDM is responsible for handling 3rd generation partnership project (3rd generation partnership project, 3GPP) authentication and key agreement (authentication and key agreement, AKA) authentication credentials, user identification handling, access authorization, registration/mobility management, subscription management, SMS management, and the like.

The AF may be an application server, which may be an operator server or a third-party server. The AF mainly supports interaction with the 3GPP core network to provide services, for example, influence on traffic routing decision, policy control functions, or providing third-party services to a network side.

The AMF is mainly responsible for signaling handling, for example, terminal registration management, terminal connection management, terminal reachability management, terminal access authorization and access authentication, terminal security functions, terminal mobility management (for example, terminal location update, terminal registration networks, and terminal handover), network slice (network slice) selection, SMF selection, and terminal functions such as registration or deregistration.

The SMF is mainly responsible for a control plane function of terminal session management, including UPF selection, control and redirection, internet protocol (internet protocol, IP) address allocation and management, session QoS management, obtaining a policy and charging control (policy and charging control, PCC) policy from a PCF, and bearer or session establishment, modification, and release.

The UPF serves as an anchor point for protocol data unit (protocol data unit, PDU) session connection, and is responsible for data packet filtering of terminals, data transmission/forwarding, rate control, generation of charging information, QoS handling for user plane, uplink transmission authentication, transmission level verification, downlink data packet buffering, downlink data notification triggering, and the like. The UPF may further serve as a branching point to support multi-homed (multi-homed) PDU sessions. Transmission resources and scheduling functions on the UPF that provide services for terminals are managed and controlled by the SMF.

The RAN is a network including one or more access network devices (which may also be referred to as RAN nodes or network devices), and implements functions such as a radio physical layer function, resource scheduling and radio resource management, radio access control and mobility management functions, quality of service management, and data compression and encryption. The access network device is connected to the UPF through a user plane interface N3, to transmit data of terminals. The access network device establishes a control plane signaling connection to the AMF through a control plane interface N2, to implement functions such as radio access bearer control.

The access network device may be a base station, a wireless fidelity (wireless fidelity, Wi-Fi) access point (access point, AP), a worldwide interoperability for microwave access (worldwide interoperability for microwave access, WiMAX) site, or the like. The base station may include base stations in various forms, for example, a macro base station, a micro base station (also referred to as a small cell), a relay station, and an access point. The base station may be specifically: an AP in a wireless local area network (wireless local area network, WLAN), and a base transceiver station (base transceiver station, BTS) in a global system for mobile communications (global system for mobile communications, GSM) or code division multiple access (code division multiple access, CDMA), or may be a base station (NodeB, NB) in wideband code division multiple access (wideband code division multiple access, WCDMA), an evolved NodeB (evolved NodeB, eNB or eNodeB) in LTE, a relay station or an access point, a vehicle-mounted device, a wearable device, a next generation NodeB (next generation NodeB, gNB) in a future 5G system, a base station in a future evolved public land mobile network (public land mobile network, PLMN) network, or the like.

The terminal may be a wireless terminal, or may be a wired terminal. The wireless terminal may be a device that provides voice and/or data connectivity for a user, a handheld device with a wireless connection function, or another processing device connected to a wireless modem. The terminal and the access network device communicate with each other through an air interface technology (for example, an NR technology or an LTE technology). Terminals may also communicate with each other through an air interface technology (for example, an NR technology or an LTE technology). The wireless terminal may communicate with one or more core network devices via the access network device, for example, communicate with an AMF or an SMF. The wireless terminal may be a mobile terminal (for example, a mobile phone), a smartphone, a satellite wireless device, a wireless modem card, a computer with a mobile terminal (for example, a laptop, portable, pocket, handheld, computer built-in, or vehicle-mounted mobile apparatus), a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), virtual reality (virtual reality, VR) glasses, augmented reality (augmented reality, AR) glasses, a machine type communication terminal, an Internet of Things terminal, a road side unit (road side unit, RSU), a communication device loaded on an uncrewed aerial vehicle, or the like. The wireless terminal may also be referred to as user equipment (user equipment, UE), a terminal device, a subscriber unit (subscriber unit), a subscriber station (subscriber station), a mobile station (mobile station), a mobile (mobile) console, a remote station (remote station), an access point (access point), an access terminal (access terminal), a user terminal (user terminal), a user agent (user agent), and the like.

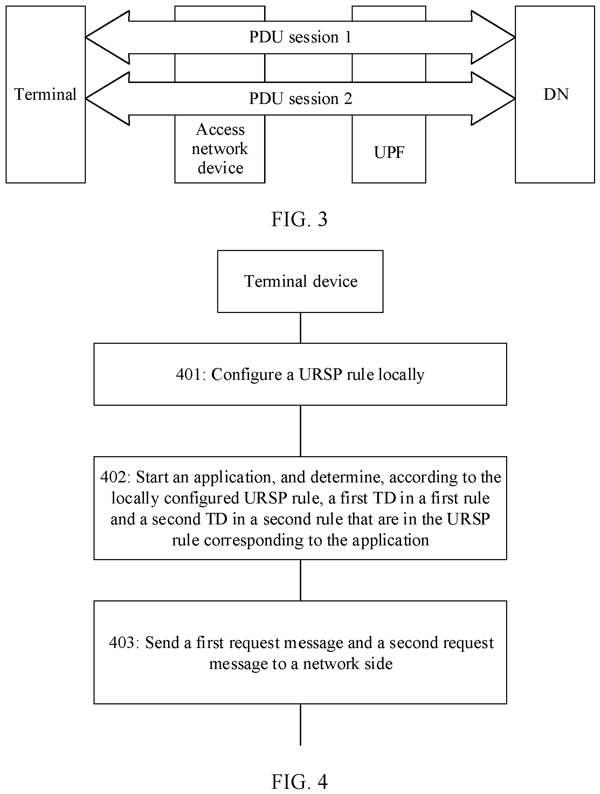

The DN is an operator network that provides a data transmission service for users, for example, an internet protocol multimedia service (IP multimedia service, IMS) network or an internet (Internet). The terminal accesses the DN by establishing a PDU session (PDU session) from the terminal to the access network device, the UPF, and to the DN. The PDU session is a connection between the terminal and the DN and is used to provide a PDU connection service. A PDU session may be an IP connection, an Ethernet connection, an unstructured data connection, or the like. A PDU connection service supported by a core network of the 5G system is a service that provides PDU exchange between a terminal and a DN determined by a data network name (data network name, DNN). The terminal may initiate and establish one or more PDU sessions to connect to a same DN or different DNs. For example, in FIG. 3, a terminal initiates and establishes a PDU session 1 and a PDU session 2, to connect to a same DN.

It may be understood that, in addition to the functional network elements shown in FIG. 2, the network architecture of the 5G network may further include other functional network elements, for example, a network exposure function (network exposure function, NEF). In embodiments of this application, the network element may also be referred to as an entity, a device, or the like.

Based on the communication architecture shown in FIG. 1, the terminal may establish two PDU sessions: a first PDU session and a second PDU session. An anchor point of the first PDU session is the first UPF (in other words, a data packet of the first PDU session needs to pass through the first UPF). An anchor point of the second PDU session is the second UPF (in other words, a data packet of the second PDU session needs to pass through the second UPF). The data packet may also be referred to as a service packet.

In embodiments of this application, in a possible implementation, the second access network device may serve as a backup station of the first access network device, so that the second access network device can ensure continuity of service communication when the first access network device is faulty. This improves reliability of an entire communication link.

In different implementation scenarios, the first access network device and the second access network device may have a same frequency deployment, or may have different frequency deployments. The first access network device and the second access network device may be backed up in a full bandwidth, or may share some spectrums. A spectral bandwidth of 100 megahertz (MHz) is used as an example. The first access network device may use first 50 MHz for operating, and use last 50 MHz to back up for the second access network device. Similarly, the second access network device may use first 50 MHz to back up for the first access network device, and use last 50 MHz to serve another terminal. In different implementation scenarios, an identifier of the first access network device and an identifier of the second access network device may be the same or different.

To adopt the foregoing architecture, a primary access network device (for example, the first access network device in FIG. 1) needs to select a secondary access network device (for example, the second access network device in FIG. 1). In the conventional technology, the primary access network device selects a secondary access network device based on an RSN value provided by a session management function (session management function, SMF). The primary access network device determines a corresponding user plane resource based on the received RSN value. For example, assuming that an RSN value of a session 1 is 1, the primary access network device returns tunnel information of the primary access network device, to be specific, a user plane connection between the primary access network device and the first UPF in FIG. 1 is established. When the primary access network device receives an RSN value 2 of a session 2, the primary access network device returns tunnel information of the secondary access network device, to be specific, a user plane connection between the secondary access network device and the second UPF in FIG. 1 is established. However, a plurality of SMFs are deployed in a network, and two UPFs in a redundant communication link are respectively controlled by two different SMFs. Each SMF provides an RSN value for the primary access network device. In the foregoing mechanism, the primary access network device needs to determine different user plane connections based on different RSN values. However, different SMFs may provide a same RSN value to the primary access network device, so that a same access network device is selected for two mutually redundant communication links. Therefore, the primary access network device needs to learn which two sessions are associated, and determine different access network devices for the two mutually redundant sessions. In this way, independence between two communication links can be ensured, to improve communication quality.

In addition, in the foregoing communication architecture, it is assumed that a plurality of sessions exist on both the first access network device and the second access network device. When the first access network device cannot support dual connectivity shown in FIG. 1, the first access network device may switch a session corresponding to the dual connectivity. For example, the session may be switched to the primary access network device or switched to the second access network device or another access network device. Therefore, in a switching scenario, the primary access network device also needs to know which two sessions are associated, to determine which session to be switched.

Based on the communication architecture shown in FIG. 1, this application provides a plurality of solutions, which are separately described below.

FIG. 4 is a signaling interaction diagram of a communication method according to an embodiment of this application. As shown in FIG. 4, the method includes the following steps.

Step 401: A terminal device locally configures a UE route selection policy (UE route selection policy, URSP) rule.

The URSP rule includes a plurality of rules, and each rule includes a traffic descriptor (traffic descriptor, TD) and a corresponding route selection descriptor (route selection descriptor, RSD). The TD is for matching a data flow. For example, the TD includes at least one of the following: an internet protocol (internet protocol, IP) 5-tuple, an identifier of an application, a data network name (data network name, DNN), or single network slice selection assistance information (single network slice selection assistance information, S-NSSAI). The RSD includes a parameter for routing a data flow that matches the TD. For example, the RSD may include at least one of a DNN, an S-NSSAI, or a service and session continuity (service and session continuity, SSC) mode. Each rule corresponds to a different TD and a different RSD. For example, if at least one of the DNN, the S-NSSAI, or the SSC mode in two RSDs is different, it indicates that the two RSDs are different.

For example, the URSP rule includes a first rule and a second rule. The first rule includes a first TD and a first RSD. The second rule includes a second TD and a second RSD. In this embodiment of this application, the URSP rule includes association information between the first rule and the second rule. The association information may be independent of each rule in the URSP rule, as shown in Table 1. Alternatively, the association information may be a part of each rule in the URSP. For example, information about another rule corresponding to each associated rule may be added to each associated rule, as shown in Table 2. Alternatively, same indication information may be added to each associated rule, to indicate that two rules are associated with each other, for example, indication information as shown in Table 3. For example, the indication information may be an identifier.

**Table 1**

| URSP rule | | |
|---|---|---|
| First rule | First TD | First RSD |
| Second rule | Second TD | Second RSD |
| The first rule is associated with the second rule | | |

**Table 2**

| URSP rule | | | |
|---|---|---|---|
| First rule | First TD | First RSD | Association with the second rule |
| Second rule | Second TD | Second RSD | Association with the first rule |

**Table 3**

| URSP rule | | | |
|---|---|---|---|
| First rule | First TD | First RSD | Indication information a |
| Second rule | Second TD | Second RSD | Indication information a |

Step 402: The terminal device starts an application, and determines, according to the locally configured URSP rule, the first TD in the first rule and the second TD in the second rule that are in the URSP rule corresponding to the application.

In addition, the terminal device may determine, based on the association information in the URSP rule, that the first TD and the second TD are associated.

For example, the application is an ultra-reliable low-latency communication (ultra-reliable low-latency communication, URLLC) application. The terminal device starts the URLLC application. An application layer of the terminal device replicates data of the application, and the data of the application corresponds to two distinct TDs, each in a distinct rule in the URSP rule. In this way, the URLLC application is associated with different RSDs in the URSP rule, to trigger the terminal device to initiate a procedure of establishing two sessions, and separately establish two sessions corresponding to two different RSDs.

It should be noted that the first TD and the second TD may correspond to a same application, or respectively correspond to two different applications, for example, two different URLLC applications.

Step 403: The terminal device sends a first request message and a second request message to a network side. The first request message is used to request to establish a first session corresponding to the first TD, and the second request message is used to request to establish a second session corresponding to the second TD. The first request message includes the first RSD corresponding to the first TD and first association information, and the first association information indicates that the first session is associated with the second session. The second request message includes the second RSD corresponding to the second TD and second association information, and the second association information indicates that the second session is associated with the first session.

For example, the first association information in the first request message may be identification information of the second session, and the second association information in the second request message may be identification information of the first session, to reflect that the first session and the second session are associated with each other.

Alternatively, for another example, the first association information in the first request message and the second association information in the second request message may correspond to same indication information. For example, the indication information may be indication information that is in the foregoing URSP and that indicates that the first TD and the second TD are associated with each other, or the indication information may be another piece of indication information. This is not limited in this application.

The first association information and the second association information may be collectively referred to as PDU session pair information (PDU session pair information).

After receiving the first request message and the second request message, the network side may separately select a proper UPF for the first session and the second session. A primary access network device may select a secondary access network device, and determine to establish dual connectivity (dual connectivity, DC). In other words, a user plane connection between the primary access network device and a first UPF and a user plane connection between the secondary access network device and a second UPF are separately established. In addition, the network side may determine, from the received first request message and the received second request message, that the first session is associated with the second session. For example, an SMF device on the network side may determine that the first session is associated with the second session, and store identification information of the two associated sessions.

The primary access network device can learn which two sessions are associated, and determine different access network devices for the two mutually redundant sessions. In this way, independence between two communication links can be ensured, to improve communication quality. In addition, when the primary access network device or the secondary access network device cannot maintain the DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side (for example, the SMF device) that the first session is associated with the second session, to determine a specific associated session to be switched.

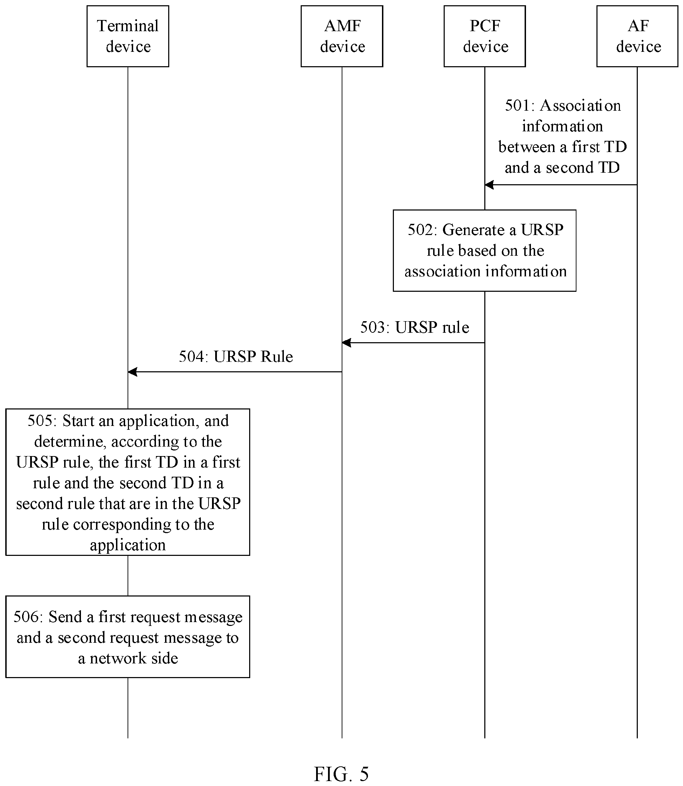

FIG. 5 is a signaling interaction diagram of a communication method according to an embodiment of this application. FIG. 5 is described with reference to FIG. 45. A difference between FIG. 5 and FIG. 4 lies in that, in the example in FIG. 5, the URSP rule used by the terminal device is locally configured, but in the example in FIG. 5, a URSP rule used by a terminal device is received from a PCF device. As shown in FIG. 5, the method includes the following steps.

Step 501: An AF device sends association information between a first TD and a second TD to a PCF device.

For example, the AF may be an application server. The AF can configure that an initiated application corresponds to the first TD and the second TD, to learn that the first TD and the second TD are associated, and send the association information between the first TD and the second TD to the PCF device.

It should be noted that the first TD and the second TD may correspond to a same application, or respectively correspond to two different applications, for example, two different URLLC services.

For example, the AF device sends the association information between the first TD and the second TD to the PCF device via an AF request message. The AF device may directly interact and communicate with the PCF device, or the AF device may interact and communicate with the PCF device via an NEF device.

Step 502: The PCF device generates a URSP rule based on the association information.

For example, in a registration procedure of the terminal device, the AMF device sends a UE policy control create request (UE policy control create request) to the PCF device. After receiving the UE policy control create request, the PCF generates the URSP rule based on the association information.

For a form and content of the URSP rule, refer to the description of step 501 in FIG. 5. Details are not described herein again.

Step 503: The PCF device sends the URSP rule to the AMF device.

For example, the PCF device sends the URSP rule to the AMF device via a LTE policy control create response (UE policy control create response).

For another example, the PCF device sends the URSP rule to the AMF device via an N1N2 message transfer request (N1N2 Message Transfer request).

Step 504: The AMF device sends the URSP rule to the terminal device.

For example, the AMF device sends the URSP rule to the terminal device via a registration accept message via a RAN.

For another example, the AMF device sends the URSP rule to the terminal device via a downlink NAS transmission message through a RAN.

Alternatively, in a possible implementation, the URSP rule generated by the PCF in step 502 is shown in Table 4. The PCF device sends, to the terminal device via the AMF, the URSP rule and indication information indicating that a first rule and a second rule in the URSP rule are associated with each other.

**Table 4**

| URSP rule | | |
|---|---|---|
| First rule | First TD | First RSD |
| Second rule | Second TD | Second RSD |

Step 505: The terminal device starts an application, and determines, according to the received URSP rule, the first TD in the first rule and the second TD in the second rule that are in the URSP rule corresponding to the application.

In addition, the terminal device may determine, according to the received URSP rule, or according to the received URSP rule and the received indication information, that the first TD in the first rule and the second TD in the second rule that are in the URSP rule are associated.

Step 506: The terminal device sends a first request message and a second request message to a network side. The first request message is used to request to establish a first session corresponding to the first TD, and the second request message is used to request to establish a second session corresponding to the second TD. The first request message includes the first RSD corresponding to the first TD and first association information, and the first association information indicates that the first session is associated with the second session. The second request message includes the second RSD corresponding to the second TD and second association information, and the second association information indicates that the second session is associated with the first session.

For other details of steps 505 and 506, refer to the descriptions of steps 502 and 503 in FIG. 5. Details are not described herein again.

Similarly, after receiving the first request message and the second request message, the network side may separately select a proper UPF for the first session and the second session. A primary access network device may select a secondary access network device, and determine to establish a DC. In other words, a user plane connection between the primary access network device and a first UPF and a user plane connection between the secondary access network device and a second UPF are separately established. In addition, the network side may determine, from the received first request message and the received second request message, that the first session is associated with the second session. For example, an SMF device on the network side may determine that the first session is associated with the second session, and store identification information of the two associated sessions.

The primary access network device can learn which two sessions are associated, and determine different access network devices for the two mutually redundant sessions. In this way, independence between two communication links can be ensured, to improve communication quality. In addition, when the primary access network device or the secondary access network device cannot maintain the DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side (for example, the SMF device) that the first session is associated with the second session, to determine a specific associated session to be switched.

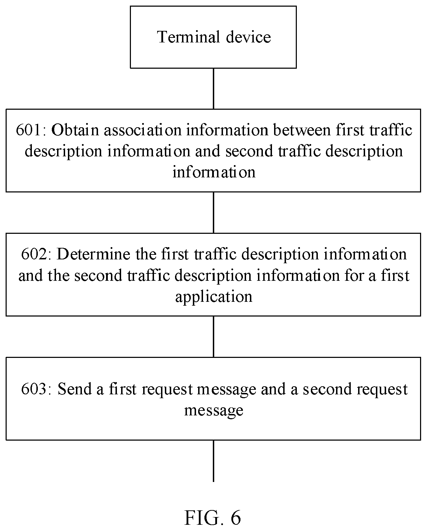

FIG. 6 is a flowchart of a communication method according to an embodiment of this application. FIG. 6 is described with reference to FIG. 4 and FIG. 5. The method is performed by a terminal device. For example, the terminal device is the terminal device in FIG. 4 or FIG. 5. As shown in FIG. 6, the method includes the following steps.

Step 601: The terminal device obtains association information between first traffic description information and second traffic description information.

For example, the first traffic description information is the first TD, and the second traffic description information is the second TD.

It should be noted that the description that the first traffic description information is associated with the second traffic description information may also be understood as that a first rule of the first traffic description information is associated with a second rule of the second traffic description information, or may be understood as that first route selection description information in the first rule is associated with second route selection description information in the second rule. This is not limited in this application.

For example, the terminal device obtains the association information between the first traffic description information and the second traffic description information from a route selection policy (for example, the foregoing URSP rule).

For example, the route selection policy includes the first rule corresponding to the first traffic description information and the second rule corresponding to the second traffic description information. The first rule includes first information indicating that the first traffic description information is associated with the second traffic description information, and the second rule includes second information indicating that the second traffic description information is associated with the first traffic description information. In a possible implementation, the first information and the second information correspond to same first indication information, and the first indication information indicates that the first traffic description information is associated with the second traffic description information. In another possible implementation, the first information includes information about the second rule, and the second information includes information about the first rule.

For example, the terminal device obtains a locally configured route selection policy. This refers to the description of step 401 in FIG. 4, and details are not described herein again.

Alternatively, the terminal device receives a route selection policy from a policy control function device. This refers to descriptions of steps 503 and 504 in FIG. 5, and details are not described herein again.

Step 602: The terminal device determines the first traffic description information and the second traffic description information for an initiated application.

In addition, the terminal device may further determine, based on the association information, that the first traffic description information is associated with the second traffic description information.

It should be noted that the first traffic description information and the second traffic description information may correspond to a same application, or respectively correspond to two different applications, for example, two different URLLC applications.

For this step, refer to the description of step 402 in FIG. 4, and details are not described herein again.

Step 603: The terminal device sends a first request message and a second request message, where the first request message is used to request to establish a first session corresponding to the first traffic description information, and the second request message is used to request to establish a second session corresponding to the second traffic description information. The first request message includes first association information, and the second request message includes second association information. The first association information indicates that the first session is associated with the second session, and the second association information indicates that the second session is associated with the first session.

In a possible implementation, the first association information includes identification information of the second session, and the second association information includes identification information of the first session.

In another possible implementation, the first association information and the second association information correspond to same second indication information, and the second indication information indicates that the first session is associated with the second session.

For this step, refer to the description of step 403 in FIG. 4, and details are not described herein again.

According to the communication method provided in this embodiment of this application, a network side may determine, from the received first request message and the received second request message, that the first session is associated with the second session. The primary access network device can learn which two sessions are associated, and determine different access network devices for the two mutually redundant sessions. In this way, independence between two communication links can be ensured, to improve communication quality. In addition, when the primary access network device or the secondary access network device cannot maintain the DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

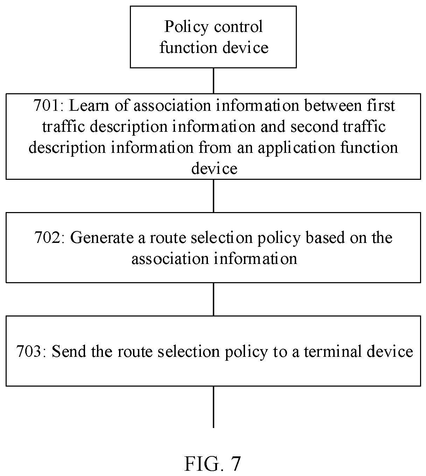

FIG. 7 is a flowchart of a communication method according to an embodiment of this application. FIG. 7 is described with reference to FIG. 5. The method is performed by a policy control function device. For example, the policy control function device is the PCF device in FIG. 5. As shown in FIG. 7, the method includes the following steps.

Step 701: The policy control function device learns of association information between first traffic description information and second traffic description information from an application function device.

It should be noted that the first traffic description information and the second traffic description information may correspond to a same application, or respectively correspond to two different applications, for example, two different URLLC applications.

For this step, refer to the description of step 501 in FIG. 5, and details are not described herein again.

Step 702: The policy control function device generates a route selection policy based on the association information.

For example, the route selection policy includes a first rule corresponding to the first traffic description information and a second rule corresponding to the second traffic description information. The first rule includes first information indicating that the first traffic description information is associated with the second traffic description information, and the second rule includes second information indicating that the second traffic description information is associated with the first traffic description information. In a possible implementation, the first information and the second information correspond to same first indication information, and the first indication information indicates that the first traffic description information is associated with the second traffic description information. In another possible implementation, the first information includes information about the second rule, and the second information includes information about the first rule.

For the route selection policy, refer to the description of the URSP rule in FIG. 5. Details are not described herein again.

For this step, refer to the description of step 502 in FIG. 5, and details are not described herein again.

Step 703: The policy control function device sends the route selection policy to a terminal device, where the route selection policy is used to determine an association between a first session corresponding to the first traffic description information and a second session corresponding to the second traffic description information.

For this step, refer to the descriptions of steps 503 and 504 in FIG. 5, and details are not described herein again.

According to the communication method provided in this embodiment of this application, after receiving the route selection policy, the terminal device sends a first request message and a second request message to a network side. The network side may determine, from the received first request message and the received second request message, that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

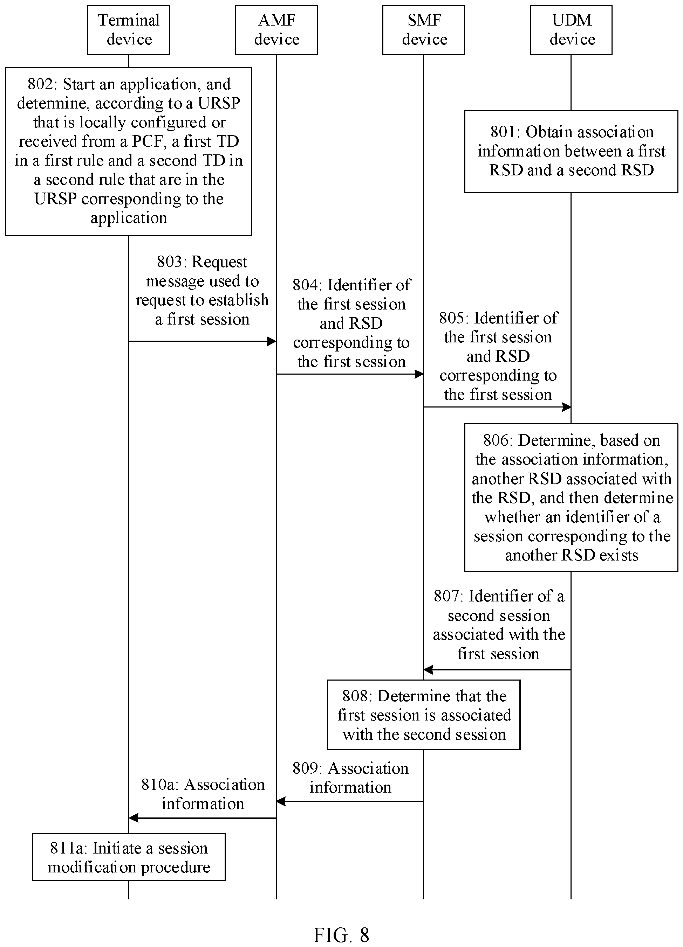

FIG. 8 is a signaling interaction diagram of a communication method according to an embodiment of this application. As shown in FIG. 8, the method includes the following steps.

Step 801: A UDM device obtains association information between a first RSD and a second RSD.

For example, the UDM device may obtain the association information between the first RSD and the second RSD in a local configuration manner. Alternatively, an AF device may send the association information to the UDM device. Correspondingly, the UDM device obtains the association information from the AF device.

The association information between the first RSD and the second RSD may alternatively be described as association information between a first rule of the first RSD and a second rule of the second RSD; or may be described as association information between a first TD in the first rule and a second TD in the second rule.

Step 802: A terminal device starts an application, and determines, according to a URSP rule that is locally configured or received from a PCF device, the first TD in the first rule and the second TD in the second rule that are in the URSP rule corresponding to the application.

For example, the application is a URLLC application. The terminal device starts the URLLC application. An application layer of the terminal device replicates data of the application, and the data of the application corresponds to two distinct TDs, each in a distinct rule in the URSP rule. In this way, the URLLC application is associated with different RSDs in the URSP rule, to trigger the terminal device to initiate a procedure of establishing two sessions, and separately establish two sessions corresponding to two different RSDs.

The following uses a procedure of establishing one of the sessions as an example for description. The session may be referred to as a first session. The first session may be a session a corresponding to the first TD and the first RSD in the first rule, or the first session may be a session b corresponding to the second TD and the second RSD in the second rule.

Step 803: The terminal device sends, to an AMF device via a RAN device (not shown in the figure), a request message used to request to establish the first session, where the request message includes identification information of the first session and an RSD corresponding to the first session.

When the first session is the session a, the RSD corresponding to the first session is the first RSD. When the first session is the session b, the RSD corresponding to the first session is the second RSD.

For example, the request message is a non-access stratum (non-access stratum, NAS) message. The NAS message includes a session identifier and a session establishment request message. The session establishment request message includes the session identifier and an RSD. Alternatively, an RSD may be directly included in the NAS message.

In another possible implementation, the association information between the first TD and the second TD is configured in the UDM device. In step 803, the request message includes the identification information of the first session and a TD corresponding to the first session. In subsequent steps, the RSD corresponding to the first session may be replaced with the TD corresponding to the first session. Details are not described in this application again.

It should be noted that the RAN device herein is a primary RAN device.

Step 804: The AMF device sends an identifier of the first session and the RSD corresponding to the first session to an SMF device.

For example, the AMF device sends an identifier of a session and an RSD corresponding to the session to the SMF device via a create session management context request (create SM context request) message.

Step 805: The SMF device sends the identifier of the first session and the RSD corresponding to the first session to the UDM device.

For example, the SMF device sends an identifier of a session and an RSD corresponding to the session to the UDM device via a registration request message.

After receiving the identifier of the session and the RSD corresponding to the session, the UDM device may store a correspondence between the identifier of the session and the RSD.

Step 806: The UDM device determines, based on the association information in step 801, another RSD associated with the RSD, and then determines whether an identifier of a session corresponding to the another RSD exists.

For example, in a procedure of establishing a 1^{st} session (for example, the foregoing session a), the SMF device sends an identifier of the session a and the first RSD corresponding to the session a to the UDM device in step 805. The UDM device stores a correspondence between the identifier of the session a and the first RSD. However, in step 806, the UDM device determines that there is no identifier of a session corresponding to the another RSD associated with the first RSD.

In a procedure of establishing a 2^{nd} session (for example, the foregoing session b), the SMF device sends an identifier of the session b and the second RSD corresponding to the session b to the UDM device in step 805. The UDM device stores a correspondence between the identifier of the session b and the second RSD. In step 806, because the UDM device stores the correspondence between the identifier of the session a and the first RSD, the UDM device may determine, based on the association information and the stored correspondence, another RSD associated with the second RSD. That is, the first RSD is an RSD of the session a, and therefore the identifier of the session a is obtained.

The identifier of the session corresponding to the another RSD is an identifier of the second session associated with the first session.

Step 807: The UDM device sends, to the SMF device, the identifier of the second session associated with the first session.

Alternatively, the UDM device may send the identifier of the first session and the identifier of the second session to the SMF device, to reflect that the first session is associated with the second session.

For example, the UDM device sends, to the SMF device via a registration response message, the identifier of the second session associated with the first session, or the identifier of the first session and the identifier of the second session.

As described above, in the procedure of establishing the session b, the UDM device obtains, in the foregoing step, the identifier of the session a associated with the session b.

Step 808: The SMF device determines that the first session is associated with the second session.

Step 809: The SMF device sends association information to the AMF device.

For example, the association information may be the identifier of the first session and the identifier of the second session that are received by the SMF in step 807. Alternatively, the association information is indication information that is generated by the SMF and that indicates that the first session is associated with the second session.

Step 810a: The AMF device sends the association information to the terminal device via the RAN device.

For example, the AMF device sends the association information to the terminal device via a session establishment accept message.

Step 811a: The terminal device initiates a session modification procedure.

For example, the terminal device initiates the session modification procedure for the second session, for example, the foregoing session a. In the session modification procedure, the terminal device sends association information to the SMF device serving the second session, and the SMF device sends the association information to the RAN device, so that the RAN device records association information between the first session and the second session. In this case, if a RAN device in DC cannot maintain the DC subsequently, the RAN device may determine a specific associated session to be switched.

It should be noted that step 811a is an optional step.

It should be noted that the association information sent by the terminal device in step 811a and the association information received by the terminal device in step 810a may have different information. For example, the association information received by the terminal device in step 810a may be the identifier of the first session and the identifier of the second session, or the indication information indicating that the first session is associated with the second session. The association information sent by the terminal device in step 811a may be the identifier of the first session, or may be same or different indication information indicating that the first session is associated with the second session.

Alternatively, in another possible implementation, step 810a and step 811a may be replaced with step 810b (not shown in the figure).

Step 810b: The AMF device sends association information to the RAN device.

In this way, the RAN device may record the association information between the first session and the second session. In this case, if one RAN device in the DC cannot maintain the DC subsequently, the RAN device may determine a specific associated session to be handed over.

In another possible implementation, operations performed by the UDM in FIG. 8 may alternatively be performed by a UDR device. This is not limited in this application.

According to the foregoing method, a network side may determine that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain the DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

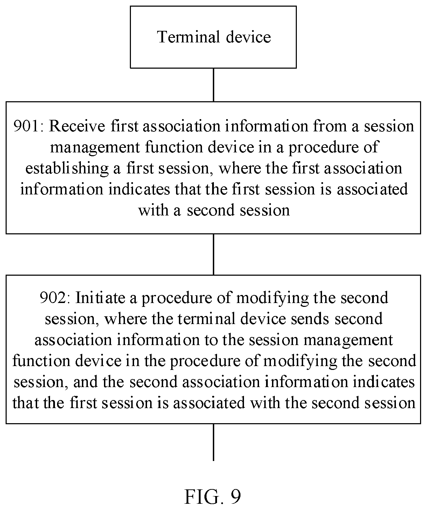

FIG. 9 is a flowchart of a communication method according to an embodiment of this application. FIG. 9 is described with reference to FIG. 8. The method is performed by a terminal device. For example, the terminal device is the terminal device in FIG. 8. As shown in FIG. 9, the method includes the following steps.

Step 901: The terminal device receives first association information from a session management function device in a procedure of establishing a first session, where the first association information indicates that the first session is associated with a second session.

For this step, refer to the descriptions of steps 809 and 810a in FIG. 8. Details are not described herein again.

Step 902: The terminal device initiates a procedure of modifying the second session. The terminal device sends second association information to the session management function device in the procedure of modifying the second session, where the second association information indicates that the first session is associated with the second session.

For example, the second association information includes an identifier of the first session.

For this step, refer to the description of step 811a in FIG. 8. Details are not described herein again.

According to the foregoing method, a network side may determine that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

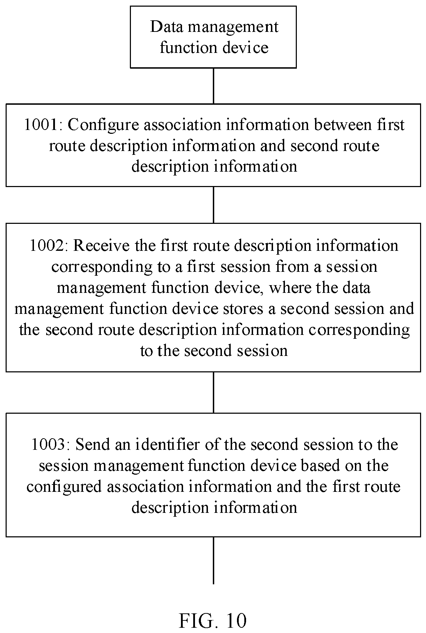

FIG. 10 is a flowchart of a communication method according to an embodiment of this application. FIG. 10 is described with reference to FIG. 8. The method is performed by a data management function device. For example, the data management function device is the UDM device in FIG. 8 or a UDR device not shown in FIG. 8. As shown in FIG. 10, the method includes the following steps.

Step 1001: The data management function device configures association information between first route description information and second route description information.

For this step, refer to the description of step 801 in FIG. 8. Details are not described herein again.

Step 1002: The data management function device receives the first route description information corresponding to a first session from a session management function device, where the data management function device stores a second session and the second route description information corresponding to the second session.

For this step, refer to the description of step 805 in FIG. 8. Details are not described herein again.

Step 1003: The data management function device sends an identifier of the second session to the session management function device based on the configured association information and the first route description information.

For example, the data management function device determines an association between the first route description information and the second route description information based on the configured association information and the first route description information. The data management function device determines the identifier of the second session corresponding to the second route description information. The data management function device sends the identifier of the second session to the session management function device.

For example, that the data management function device sends the identifier of the second session to the session management function device includes: The data management function device sends association information to the session management function device, where the association information includes an identifier of the first session and the identifier of the second session.

For this step, refer to the descriptions of steps 806 and 807 in FIG. 8, and details are not described herein again.

According to the foregoing method, a network side may determine that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

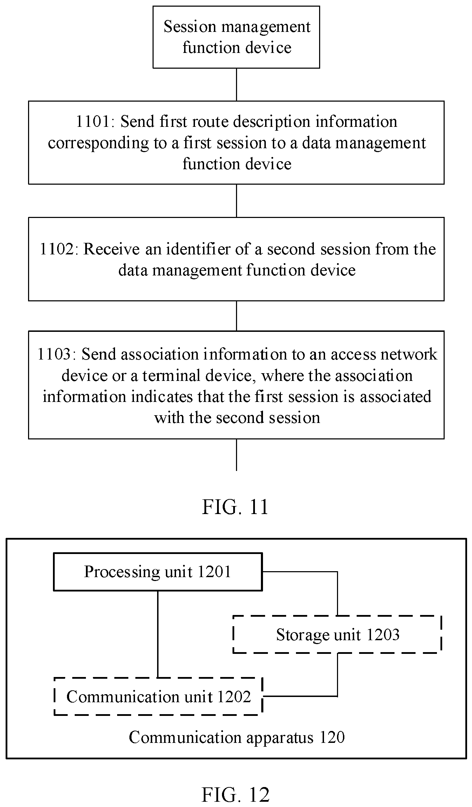

FIG. 11 is a flowchart of a communication method according to an embodiment of this application. FIG. 11 is described with reference to FIG. 8. The method is performed by a session management function device. For example, the session management function device is the SMF device in FIG. 8. As shown in FIG. 11, the method includes the following steps.

Step 1101: The session management function device sends first route description information corresponding to a first session to a data management function device.

For this step, refer to the description of step 805 in FIG. 8. Details are not described herein again.

Step 1102: The session management function device receives an identifier of a second session from the data management function device.

For example, that the session management function device receives the identifier of the second session from the data management function device includes: The session management function device receives association information from the data management function device, where the association information includes an identifier of the first session and the identifier of the second session.

For this step, refer to the description of step 807 in FIG. 8. Details are not described herein again.

Step 1103: The session management function device sends association information to an access network device and/or a terminal device, where the association information indicates that the first session is associated with the second session.

For this step, refer to the descriptions of steps 809, 810a, and 811a in FIG. 8, or refer to the descriptions of steps 809 and 810b in FIG. 8. Details are not described herein again.

According to the foregoing method, a network side may determine that the first session is associated with the second session. A primary access network device can learn which two sessions are associated, and determine different access network devices for the two mutually redundant sessions. In this way, independence between two communication links can be ensured, to improve communication quality. In addition, when the primary access network device or a secondary access network device cannot maintain DC (for example, a fault occurs or load is too high), the access network device may switch a session in the DC connection. For example, when the secondary access network device cannot maintain the DC, a session on the secondary access network device in the DC may be switched to the primary access network device or switched to another secondary access network device. In this case, the access network device may learn from the network side that the first session is associated with the second session, to determine a specific associated session to be switched.

It should be noted that each message in the foregoing figures may have another name. In addition, information transmission between network elements may also be implemented by invoking a network function of each network element in a service-based architecture. This is not limited in the present invention.

The foregoing mainly describes the solutions in embodiments of this application from the perspective of a method. It may be understood that, to implement the foregoing functions, each network element, for example, a terminal device, a policy control function device, a data management function device, or a session management function device, includes at least one of a corresponding hardware structure or a corresponding software module for performing each function. A person skilled in the art should be easily aware that, in combination with units and algorithm steps of the examples described in embodiments disclosed in this specification, this application may be implemented by hardware or a combination of hardware and computer software. Whether a function is performed in a manner of hardware or computer software driving hardware depends on a specific application and a design constraint of the technical solution. A person skilled in the art may use different methods to implement the described functions for each specific application. However, it should not be considered that such an implementation goes beyond the scope of this application.

In embodiments of this application, division into functional units may be performed on the terminal device, the policy control function device, the data management function device, the session management function device, or the like based on the foregoing method examples. For example, functional units may be obtained through division corresponding to each function, or two or more functions may be integrated into one processing unit. The integrated unit may be implemented in a form of hardware, or may be implemented in a form of a software functional unit. It should be noted that unit division in embodiments of this application is an example, and is merely logical function division. In an actual implementation, there may be another division manner.

For example, FIG. 12 is a schematic diagram of a possible structure of a communication apparatus (denoted as a communication apparatus 120) in the foregoing embodiment. The communication apparatus 120 includes a processing unit 1201. Optionally, the apparatus further includes a communication unit 1202 and/or a storage unit 1203. The schematic diagram of the structure shown in FIG. 12 may show a structure of the terminal device, the policy control function device, the data management function device, the session management function device, or the like in the foregoing embodiments.

When the schematic diagram of the structure shown in FIG. 12 shows the structure of the terminal device in the foregoing embodiment, the processing unit 1201 is configured to control and manage an action of the terminal device. For example, the processing unit 1201 is configured to perform steps 401 and 402 in FIG. 4, step 505 in FIG. 5, steps 601 and 602 in FIG. 6, step 802 in FIG. 8, optionally, 811a, step 902 in FIG. 9, and/or an action performed by the terminal device in another process described in embodiments of this application. The processing unit 1201 may communicate with another network entity by using the communication unit 1202. For example, the communication unit 1202 is configured to perform step 403 in FIG. 4, step 506 in FIG. 5, step 603 in FIG. 6, step 803 in FIG. 8, and optionally, 810a, step 901 in FIG. 9, and/or communication interaction performed by the terminal device in another process described in embodiments of this application. The storage unit 1203 is configured to store program code and data of the terminal device.

When the schematic diagram of the structure shown in FIG. 12 shows the structure of the policy control function device in the foregoing embodiment, the processing unit 1201 is configured to control and manage an action of the policy control function device. For example, the processing unit 1201 is configured to perform step 502 in FIG. 5, step 702 in FIG. 7, and/or an action performed by the policy control function device in another process described in embodiments of this application. The processing unit 1201 may communicate with another network entity by using the communication unit 1202. For example, the communication unit 1202 is configured to perform steps 501 and 503 in FIG. 5, steps 701 and 703 in FIG. 7, and/or communication interaction performed by the policy control function device in another process described in embodiments of this application. The storage unit 1203 is configured to store program code and data of the policy control function device.

When the schematic diagram of the structure shown in FIG. 12 shows the structure of the data management function device in the foregoing embodiment, the processing unit 1201 is configured to control and manage an action of the data management function device. For example, the processing unit 1201 is configured to perform steps 801 and 806 in FIG. 8, steps 1001 and 1003 in FIG. 10, and/or an action performed by the data management function device in another process described in embodiments of this application. The processing unit 1201 may communicate with another network entity by using the communication unit 1202. For example, the communication unit 1202 is configured to perform steps 805 and 807 in FIG. 8, steps 701 and 703 in FIG. 7, step 1002 in FIG. 10, and/or communication interaction performed by the data management function device in another process described in embodiments of this application. The storage unit 1203 is configured to store program code and data of the data management function device.

When the schematic diagram of the structure shown in FIG. 12 shows the structure of the session management function device in the foregoing embodiment, the processing unit 1201 is configured to control and manage an action of the session management function device. For example, the processing unit 1201 is configured to perform step 808 in FIG. 8, and/or an action performed by the session management function device in another process described in embodiments of this application. The processing unit 1201 may communicate with another network entity by using the communication unit 1202. For example, the communication unit 1202 is configured to perform steps 804, 805, 807, and 808 in FIG. 8, 1101, 1102, and 1103 in FIG. 11, and/or communication interaction performed by the session management function device in another process described in embodiments of this application. The storage unit 1203 is configured to store program code and data of the session management function device.

The schematic diagram of the structure shown in FIG. 12 may further show a structure of another network element in this application. In this case, each unit in FIG. 12 is configured to perform an action of a corresponding network element. For details, refer to the method part. Details are not described herein again.

The communication apparatus 120 may be a device, or may be a chip in a device. When the communication apparatus 120 is a device, the processing unit 1201 may be a processor or a controller, and the communication unit 1202 may be a communication interface, a transceiver, a transceiver machine, a transceiver circuit, a transceiver apparatus, or the like. The communication interface is a general term, and may include one or more interfaces. The storage unit 1203 may be a memory. When the communication apparatus 120 is a chip in a device, the processing unit 1201 may be a processor or a controller, and the communication unit 1202 may be an input interface and/or an output interface, a pin, a circuit, or the like. The storage unit 1203 may be a storage unit (for example, a register or a cache) in the chip, or may be a storage unit located outside the chip in the device (for example, a read-only memory or a random access memory).

The communication unit may also be referred to as a transceiver unit. An antenna and a control circuit that have a transceiver function in the communication apparatus 120 may be considered as the communication unit 1202 in the communication apparatus 120, and a processor that has a processing function may be considered as the processing unit 1201 in the communication apparatus 120. Optionally, a component configured to implement a receiving function in the communication unit 1202 may be considered as a receiving unit. The receiving unit is configured to perform receiving steps in embodiments of this application. The receiving unit may be a receiving machine, a receiver, a receiving circuit, or the like. A component configured to implement a sending function in the communication unit 1202 may be considered as a sending unit. The sending unit is configured to perform sending steps in embodiments of this application. The sending unit may be a transmitting machine, a transmitter, a transmission circuit, or the like.

If an integrated unit in FIG. 12 is implemented in a form of a software functional module and is sold or used as an independent product, the integrated unit in FIG. 12 may be stored in a computer-readable storage medium. Based on such an understanding, the technical solutions of embodiments of this application essentially, or part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The storage medium for storing the computer software product includes any medium that can store program code, such as a USB flash drive, a removable hard disk, a read-only memory (read-only memory, ROM), a random access memory (random access memory, RAM), a magnetic disk, or an optical disc.

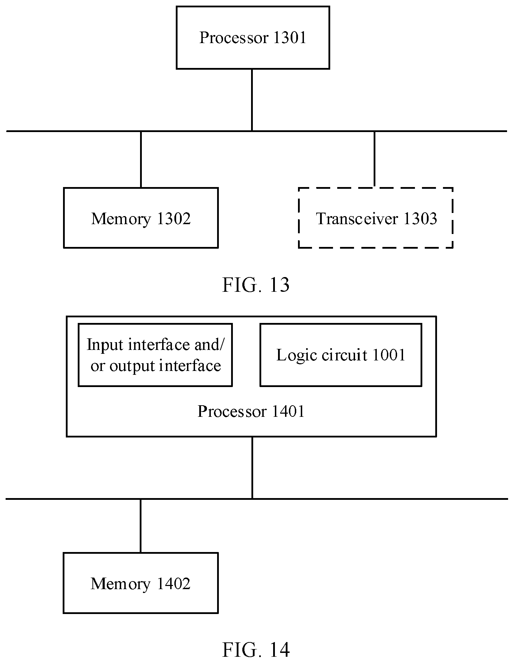

An embodiment of this application further provides a schematic diagram of a hardware structure of a communication apparatus. Refer to FIG. 13 or FIG. 14. The communication apparatus includes a processor 1301, and optionally, further includes a memory 1302 connected to the processor 1301.

The processor 1301 may be a general-purpose central processing unit (central processing unit, CPU), a microprocessor, an application-specific integrated circuit (application-specific integrated circuit, ASIC), or one or more integrated circuits configured to control program execution of the solutions in this application. The processor 1301 may also include a plurality of CPUs, and the processor 1301 may be a single-core processor (single-CPU), or may be a multicore processor (multi-CPU). The processor herein may be one or more devices, circuits, or processing cores configured to process data (for example, computer program instructions).

The memory 1302 may be a ROM or another type of static storage device that can store static information and instructions, a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM), another compact disc storage or optical disk storage (including a compact disc, laser disc, optical disc, digital versatile disc, Blu-ray disc, and the like), a magnetic disk storage medium or another magnetic storage device, or any other medium that can be configured to carry or store expected program code in a form of instructions or a data structure and that can be accessed by a computer. This is not limited in this embodiment of this application. The memory 1302 may exist independently. In this case, the memory 1302 may be located in the communication apparatus, or may be located outside the communication apparatus. Alternatively, the memory 1302 may be integrated with the processor 1301. The memory 1302 may include computer program code. The processor 1301 is configured to execute the computer program code stored in the memory 1302, to implement the method provided in embodiments of this application.

In a first possible implementation, refer to FIG. 13. The communication apparatus further includes a transceiver 1303. The processor 1301, the memory 1302, and the transceiver 1303 are connected through a bus. The transceiver 1303 is configured to communicate with another device or communication network. Optionally, the transceiver 1303 may include a transmitter and a receiver. A component configured to implement a receiving function in the transceiver 1303 may be considered as a receiver, and the receiver is configured to perform receiving steps in embodiments of this application. A component configured to implement a sending function in the transceiver 1303 may be considered as a transmitter, and the transmitter is configured to perform sending steps in embodiments of this application.

Based on the first possible implementation, the schematic diagram of the structure shown in FIG. 13 may show a structure of the terminal device, the policy control function device, the data management function device, the session management function device, or the like in the foregoing embodiments. The processor 1301 may be configured to implement a function of the processing unit 1201 in FIG. 12, the memory 1302 is configured to implement a function of the storage unit 1203 in FIG. 12, and the transceiver 1303 is configured to implement a function of the communication unit 1202 in FIG. 12. The schematic diagram of the structure shown in FIG. 13 may further show a structure of another network element in this application. In this case, each component in FIG. 13 is configured to perform an action of a corresponding network element. For details, refer to the method part. Details are not described herein again.

In a second possible implementation, the processor 1301 includes a logic circuit, and an input interface and/or an output interface. The output interface is configured to perform a sending action in a corresponding method, and the input interface is configured to perform a receiving action in a corresponding method. Based on the second possible implementation, refer to FIG. 14. The schematic diagram of the structure shown in FIG. 14 may show a structure of the terminal device, the policy control function device, the data management function device, the session management function device, or the like in the foregoing embodiments.

When the schematic diagram of the structure shown in FIG. 14 shows the structure of the terminal device in the foregoing embodiment, the processor 1301 is configured to control and manage an action of the terminal device. For example, the processor 1301 is configured to perform steps 401 and 402 in FIG. 4, step 505 in FIG. 5, steps 601 and 602 in FIG. 6, step 802 in FIG. 8, optionally, 811a, step 902 in FIG. 9, and/or an action performed by the terminal device in another process described in embodiments of this application. The processor 1301 may communicate with another network entity through the input interface and/or the output interface. The memory 1302 is configured to store program code and data of the terminal device.

When the schematic diagram of the structure shown in FIG. 14 shows the structure of the policy control function device in the foregoing embodiment, the processor 1301 is configured to control and manage an action of the policy control function device. For example, the processor 1301 is configured to perform step 502 in FIG. 5, step 702 in FIG. 7, and/or an action performed by the policy control function device in another process described in embodiments of this application. The processor 1301 may communicate with another network entity through the input interface and/or the output interface. The memory 1302 is configured to store program code and data of the policy control function device.

When the schematic diagram of the structure shown in FIG. 14 shows the structure of the data management function device in the foregoing embodiment, the processor 1301 is configured to control and manage an action of the data management function device. For example, the processor 1301 is configured to perform steps 801 and 806 in FIG. 8, steps 1001 and 1003 in FIG. 10, and/or an action performed by the data management function device in another process described in embodiments of this application. The processor 1301 may communicate with another network entity through the input interface and/or the output interface. The memory 1302 is configured to store program code and data of the data management function device.

When the schematic diagram of the structure shown in FIG. 14 shows the structure of the session management function device in the foregoing embodiment, the processor 1301 is configured to control and manage an action of the session management function device. For example, the processor 1301 is configured to perform step 808 in FIG. 8, and/or an action performed by the session management function device in another process described in embodiments of this application. The processor 1301 may communicate with another network entity through the input interface and/or the output interface. The memory 1302 is configured to store program code and data of the session management function device.

The schematic diagram of the structure shown in FIG. 14 may further show a structure of another network element in this application. In this case, each component in FIG. 14 is configured to perform an action of a corresponding network element. For details, refer to the method part. Details are not described herein again.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a communication apparatus, including a processor and an interface. The processor is coupled to a memory through the interface. When the processor executes a computer program or computer-executable instructions in the memory, any one of the foregoing methods is performed.

An embodiment of this application further provides a communication system, including at least two network elements in embodiments of this application, for example, one or more of the terminal device, the policy control function device, the data management function device, or the session management function device.

All or some of the foregoing embodiments may be implemented by using software, hardware, firmware, or any combination thereof. When a software program is used for an implementation, the implementation may be totally or partially implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described herein with reference to embodiments, in a process of implementing the claimed application, a person skilled in the art may understand and implement other variations of disclosed embodiments by viewing the accompanying drawings, disclosed content, and the accompanying claims. In the claims, "comprising" (comprising) does not exclude another component or step, and "one" or "a" does not exclude a case of a plurality. A single processor or another unit may implement several functions enumerated in the claims. The fact that some measures are described in mutually different dependent claims does not mean that these measures cannot be combined to produce a good effect.

Although this application is described with reference to specific features and embodiments thereof, it is clear that various modifications and combinations may be made to this application without departing from the spirit and scope of this application. Correspondingly, the specification and the accompanying drawings are merely examples of descriptions of this application defined by the following claims, and are deemed to have covered any and all modifications, variations, combinations, or equivalents that fall within the scope of this application. It is clear that a person skilled in the art may make various modifications and variations to this application without departing from the spirit and scope of this application. Thus, this application is intended to cover such modifications and variations to this application, provided that the modifications and variations fall within the scope of the claims of this application and their equivalent technologies. The foregoing descriptions are merely specific implementations of this application, but are not intended to limit the protection scope of this application. Any variation or replacement readily figured out by a person skilled in the art within a technical scope disclosed in this application shall fall within the protection scope of this application. Therefore, the protection scope of this application shall be subject to the protection scope of the claims.

## Claims

1. A communication method, comprising:
obtaining, by a terminal device, association information between first traffic description information and second traffic description information;
determining, by the terminal device, the first traffic description information and the second traffic description information for an initial application; and
sending, by the terminal device, a first request message and a second request message, wherein the first request message is used to request to establish a first session corresponding to the first traffic description information, the second request message is used to request to establish a second session corresponding to the second traffic description information,
the first request message and the second request message comprise same session pair information, and the session pair information comprised in the first request message and the second request message indicates that the first session and the second session are mutually redundant sessions.

2. The method according to claim 1, further comprising:
determining, by the terminal device based on the association information, that the first traffic description information is associated with the second traffic description information.

3. The method according to claim 1 or 2, wherein the obtaining, by a terminal device, association information between first traffic description information and second traffic description information comprises:
obtaining, by the terminal device, the association information between the first traffic description information and the second traffic description information from a route selection policy.

4. The method according to claim 3, wherein the route selection policy comprises a first rule corresponding to the first traffic description information and a second rule corresponding to the second traffic description information, the first rule comprises first information indicating that the first traffic description information is associated with the second traffic description information, and the second rule comprises second information indicating that the second traffic description information is associated with the first traffic description information.

5. The method according to claim 4, wherein the first information and the second information correspond to same first indication information, and the first indication information indicates that the first traffic description information is associated with the second traffic description information.

6. The method according to claim 5, wherein the first indication information is the session pair information.

7. The method according to any one of claims 3 to 6, further comprising:
obtaining, by the terminal device, a locally configured route selection policy.

8. The method according to any one of claims 3 to 6, further comprising:
receiving, by the terminal device, a route selection policy from a policy control function device.

9. The method according to any one of claims 1 to 8, wherein the redundant session is used to provide a communication service for a same service, and corresponds to two mutually redundant communication links, and the two mutually redundant communication links comprise: a first communication link passing through a terminal, a first access network device, and a first user plane function network element, and a second communication link passing through the terminal, a second access network device, and a second user plane function network element.

10. A communication method, comprising:
learning of, by a policy control function device, association information between first traffic description information and second traffic description information from an application function device;
generating, by the policy control function device, a route selection policy based on the association information; and
sending, by the policy control function device, the route selection policy to a terminal device, wherein the route selection policy is used to determine an association between a first session corresponding to the first traffic description information and a second session corresponding to the second traffic description information.

11. The method according to claim 10, wherein the route selection policy comprises a first rule corresponding to the first traffic description information and a second rule corresponding to the second traffic description information, the first rule comprises first information indicating that the first traffic description information is associated with the second traffic description information, and the second rule comprises second information indicating that the second traffic description information is associated with the first traffic description information.

12. The method according to claim 11, wherein the first information and the second information correspond to same first indication information, and the first indication information indicates that the first traffic description information is associated with the second traffic description information; or
the first information comprises information about the second rule, and the second information comprises information about the first rule.

13. A communication method, comprising:
receiving, by a terminal device, first association information from a session management function device in a procedure of establishing a first session, wherein the first association information indicates that the first session is associated with a second session;
initiating, by the terminal device, a procedure of modifying the second session; and
sending, by the terminal device, second association information to the session management function device in the procedure of modifying the second session, wherein the second association information indicates that the first session is associated with the second session.

14. The method according to claim 13, wherein the second association information comprises an identifier of the first session.

15. A communication method, comprising:
configuring, by a data management function device, association information between first route description information and second route description information;
receiving, by the data management function device, the first route description information corresponding to a first session from a session management function device, wherein the data management function device stores a second session and the second route description information corresponding to the second session; and
sending, by the data management function device, an identifier of the second session to the session management function device based on the configured association information and the first route description information.

16. The method according to claim 15, wherein the sending, by the data management function device, an identifier of the second session to the session management function device based on the configured association information and the first route description information comprises:
determining, by the data management function, an association between the first route description information and the second route description information based on the configured association information and the first route description information;
determining, by the data management function, the identifier of the second session corresponding to the second route description information; and
sending, by the data management function, the identifier of the second session to the session management function device.

17. The method according to claim 15 or 16, wherein the sending, by the data management function, the identifier of the second session to the session management function device comprises:
sending, by the data management function, association information to the session management function device, wherein the association information comprises an identifier of the first session and the identifier of the second session.

18. A communication method, comprising:
sending, by a session management function device, first route description information corresponding to a first session to a data management function device;
receiving, by the session management function device, an identifier of a second session from the data management function device; and
sending, by the session management function device, association information to an access network device or a terminal device, wherein the association information indicates that the first session is associated with the second session.

19. The method according to claim 18, wherein the receiving, by the session management function device, an identifier of a second session from the data management function device comprises:
receiving, by the session management function device, association information from the data management function device, wherein the association information comprises an identifier of the first session and the identifier of the second session.

20. A communication apparatus, comprising a processor, wherein
the processor is configured to read a program from a memory and run the program, to implement the method according to any one of claims 1 to 9, or implement the method according to claim 13 or 14.

21. A communication apparatus, comprising a processor, wherein
the processor is configured to read a program from a memory and run the program, to implement the method according to any one of claims 10 to 12.

22. A communication apparatus, comprising a processor, wherein
the processor is configured to read a program from a memory and run the program, to implement the method according to any one of claims 15 to 17.

23. A communication apparatus, comprising a processor, wherein
the processor is configured to read a program from a memory and run the program, to implement the method according to claim 18 or 19.

24. A computer program product comprising instructions, wherein when the computer program product runs on a computer, the computer is enabled to perform the method according to any one of claims 1 to 19.

25. A computer-readable storage medium, wherein the computer-readable storage medium stores instructions, and when the instructions are run on a computer, a processor is enabled to perform the method according to any one of claims 1 to 19.

26. A communication system, comprising:
a data management function device, configured to perform the method according to any one of claims 15 to 17; and
a session management function device, configured to perform the method according to claim 18 or 19.
